# EUROPÄISCHE PATENTANMELDUNG

(11) **EP 4 295 983 A1**
(43) Veröffentlichungstag der Anmeldung: **27.12.2023**
(21) Anmeldenummer: 23180957.5
(22) Anmeldetag: 22.06.2023
(51) Int. Cl.: B23K 1/00, B23K 3/06, H01R 4/02, H01R 43/02, B23K 101/38

(54) **LÖTMASCHINE UND VERFAHREN ZUR DURCHFÜHRUNG EINES LÖTVORGANGES**

(30) Priorität: 23.06.2022 AT 504512022
(71) Anmelder: Khu, Peter, 1210 Wien (AT)
(72) Erfinder: Khu, Peter, 1210 Wien (AT)
(74) Vertreter: Patentanwälte Pinter & Weiss OG

(57) **Zusammenfassung**

Um die Prozessstabilität bei der Herstellung einer Lötverbindung zwischen zwei Bauteilen (1), sowie die Qualität einer solchen Lötverbindung zu verbessern, ist vorgesehen dass, das Lot (12) mit einem Lotantrieb (20) zur Lötstelle (5) zugeführt wird, bis das Lot (12) an der Lötstelle (5) an zumindest einem Bauteil (A, B) ansteht, der Lotantriebs (20) bei anstehendem Lot (12) weiter aktiviert bleibt, um den Lötwagen (22) eine vorgegebene Lotlänge (L) aus einen Ausgangslage zu bewegen, bis eine vorgegebene Lotlänge (L) erreicht wird und dann die Energiequelle (11) zum Löten aktiviert wird, sodass das Lot (12) schmilzt und der Lötwagen (22) zurück in Richtung der Ausgangslage bewegt wird.

## Beschreibung

Die gegenständliche Erfindung betrifft eine Lötmaschine mit einem Maschinenrahmen an dem Spannbacken angeordnet sind, wobei zumindest eine Spannbacke relativ zum Maschinenrahmen zwischen einer Offenstellung und einer Geschlossenstellung bewegbar ist und die Spannbacken einen elektrischen Anschluss haben, an denen eine elektrische Energiequelle angeschlossen ist, und an der Lötmaschine ein Lotantrieb vorgesehen ist, um ein Lot in Richtung zu einer Lötstelle im Bereich der Spannbacken zu bewegen. Die Erfindung betrifft ebenso ein Verfahren zum Durchführen einer Lötung mit einer solchen Lötmaschine.

Beim Konfektionieren von elektrischen Kabeln wird häufig an einem Ende des Kabels ein Kontaktstück, wie beispielsweise ein Kabelschuh oder ein Kontaktpin, angebracht, mit dem bei Verwendung des Kabels eine elektrische Verbindung zwischen dem Kabel und einem Kabelanschluss hergestellt werden kann. Zur Verbindung des Kabels mit dem Kontaktstück werden oftmals Crimpverbindungen eingesetzt, mit denen das elektrische Kabel (bzw. dessen elektrische Leiter) in einem Crimpabschnitt des Kontaktstückes eingepresst wird. Um eine betriebssichere, dauerfeste und elektrisch gut leitende Verbindung zwischen dem Kontaktstück und dem Kabel herzustellen, kann das Kabel und das Kontaktstück nach dem Crimpen auch noch verschweißt werden, beispielsweise mittels Laserschweißen.

Derartige Verbindungsverfahren sind aber prozesstechnisch aufwendig und mit Schwierigkeiten verbunden. Zuerst muss eine elektrische Isolation des Kabels entfernt werden, um die elektrischen Leiter des Kabels freizulegen, ohne dabei die Leiter zu beschädigen. Danach muss der freigelegte Leiterabschnitt im Crimpabschnitt angeordnet werden und darin verpresst werden. Dabei ist darauf zu achten, dass eine gute elektrische Verbindung hergestellt wird, ohne dabei die elektrischen Leiter zu beschädigen. Beim Verschweißen kann es zu Schweißspritzern, Oxidation oder Schmauchspuren kommen, was das Kabel ebenso beeinträchtigen kann. Kommen elektrische Leiter aus Aluminium zum Einsatz, dann besteht zusätzlich noch das Problem, dass sich an der Oberfläche von Aluminium rasch eine elektrisch isolierende Oxidschicht ausbildet, die die elektrische Leifähigkeit beeinträchtigen kann und auch beim Verschweißen zu Beeinträchtigungen führen kann.

Als Alternative zu Crimpverbindungen werden auch Lötverbindungen verwendet, um ein Kontaktstück mit einem Ende eines elektrischen Kabels elektrisch zu verbinden. Auch bei einer Lötverbindung muss zuerst eine allfällige elektrische Isolation des Kabels entfernt werden, um die elektrischen Leiter des Kabels freizulegen, ohne dabei die Leiter zu beschädigen. Danach muss der freigelegte Leiterabschnitt in einem Lötabschnitt des Kontaktstücks angeordnet werden und darin verlötet werden. Beim Löten muss das Lot im Bereich der Lötverbindung aufgeschmolzen werden, sodass das Lot in den Bereich des Lötabschnitts fließen kann und dort nach dem Erstarren des Lötzinns die elektrische Verbindung herstellt. Hierbei bestehen insbesondere zwei Probleme, die die Prozessstabilität und die Qualität der Lötverbindung beeinflussen. Zum einen ist darauf zu achten, dass durch die Wärme für das Schmelzen des Lotes eine elektrische Isolierung des Kabels, die üblicherweise aus einem Kunststoff besteht, oder eine elektrische Schirmlage des Kabels, die aus einer dünnen metallisierten Kunststofffolie bestehen kann, nicht beschädigt wird. Zum anderen und insbesondere ist die richtige Menge des Lötzinns entscheidend. Zu wenig Lot kann für einen schlechten Kontaktwiderstand sorgen und damit für eine schlechte elektrische Verbindung zwischen Kotaktstück und Kabel. Zu viel Lot kann dazu führen, dass das Lötzinn beim Verlöten aus dem Lötbereich austritt und am Kontaktstück oder auch am Kabel haften bleibt, was beides unerwünscht ist oder eine aufwendige Nachbearbeitung notwendig macht.

Ähnliche Probleme treten allgemein beim Löten von zwei Bauteilen auf.

Es ist eine Aufgabe der gegenständlichen Erfindung die Prozessstabilität bei der Herstellung einer Lötverbindung zwischen zwei Bauteilen, sowie die Qualität einer solchen Lötverbindung zu verbessern.

Diese Aufgabe wird mit einer Lötmaschine nach Anspruch 1 und einem Verfahren zum Löten mit einer solchen Lötmaschine nach Anspruch 5 gelöst.

Dadurch, dass der Lotantrieb auf dem relativ zum Maschinenrahmen bewegbaren Lötwagen angeordnet ist, kann eine definierte Lotlänge durch den Lotantrieb und die resultierende Bewegung des Lötwagens eingestellt werden. Damit ist die Menge des abschmelzenden Lotes genau und wiederholbar dosierbar und einstellbar. Über die Lotlänge kann die Lötmaschine darüber hinaus auch einfach und flexibel auf unterschiedliche Lötvorgänge umgestellt werden, auch von einem Lötvorgang zum nächsten. Durch die Anwendung des Widerstandslötens kann dazu noch die in die Lötstelle zum Löten eingebrachte Wärme genau und lokal eingegrenzt kontrolliert werden, um Beschädigungen der zu lötenden Bauteile zu vermeiden.

Die eingebrachte Wärme kann noch besser kontrolliert werden, wenn der Lötstrom pulsartig erzeugt wird.

Wenn das Lot bei Beenden des Lötvorganges durch den Lotantrieb ein vorgegebenes Stück in Richtung von der Lötstelle weg zurückgezogen wird kann erreicht werden, dass sich das Lot beim Erstarren nicht mit der Lötstelle verbindet. Ebenso kann damit eine definierte Lage des Lotes nach einem Lötvorgang hergestellt werden.

In einer bevorzugten Ausführung ist am Maschinenrahmen ein Anschlag vorgesehen, an dem der Lötwagen in der Ausgangslage vor dem Löten anliegt. Der Anschlag sorgt auf einfache Weise für einen definierte Position des Lötwagens vor dem Löten. Die Lotlänge kann dann auf diese Ausgangslage bezogen sein.

Die Lotlänge kann in einer Ausführung durch einen am Maschinenrahmen vorgesehenen Endanschlag, an dem der Lötwagen in der Endlage anliegt, eingestellt werden. Der Endanschlag ist hierfür vorzugsweise verstellbar, um verschiedene Lotlängen vorgeben zu können

In einer andere Ausführungsform, ist am Maschinenrahmen ein Wegsensor, Positionssensor oder Abstandssensor vorgesehen, um die Position des Lötwagens relativ zu einem vorgegebenen Bezugspunkt am Maschinenrahmen, vorzugsweise einem Anschlag in der Ausgangslage, zu erfassen. Über die erfasste Position kann dann ebenso die gewünschte Lotlänge eingestellt werden.

Die gegenständliche Erfindung wird nachfolgend unter Bezugnahme auf die Figuren 1 bis 3d näher erläutert, die beispielhaft, schematisch und nicht einschränkend vorteilhafte Ausgestaltungen der Erfindung zeigen. Dabei zeigt
Fig.1 zeigt eine Beispielhafte Lötverbindung zwischen einem elektrischen Leiter eines Kabels als ersten Bauteil und einem Kontaktstück als zweiten Bauteil,
Fig.2 zeigt eine Ausgestaltung einer erfindungsgemäßen Lotmaschine,
Fig.3a bis 3d zeigt einen erfindungsgemäßen Ablauf eines Lötvorganges mit der erfindungsgemäßen Lötmaschine.

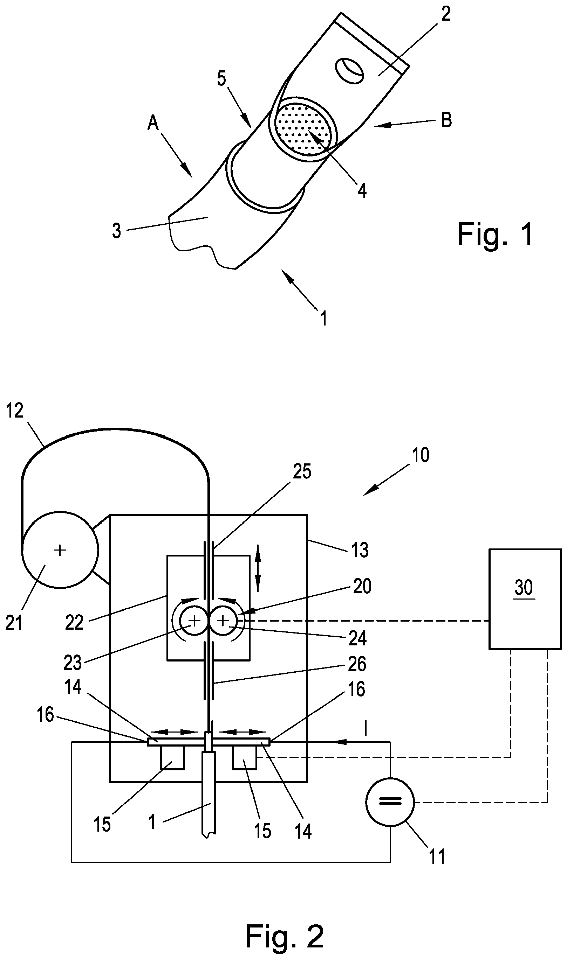

Fig.1 zeigt das Verlöten von zwei Bauteilen A, B am Beispiel eines Kabels 1 mit elektrischen Leiter 4 (Bauteil A) an dessen axialem Ende ein Kontaktstück 2 (Bauteil B), in der gezeigten Ausführung ein Kabelschuh, angeordnet werden soll. Der Bauteil A und der Bauteil B liegen an einer Lötstelle 5 aneinander an und werden an der Lötstelle 5 miteinander verlötet. Beim Verlöten wird Lot im Bereich der Lötstelle 5 geschmolzen, sodass das geschmolzene Lot zwischen den Bauteil A und den Bauteil B, im Beispiel der Fig.1 zwischen den elektrischen Leiter und dem Lötabschnitt 5 des Kontaktstücks 2 und gegebenenfalls auch zwischen Kabellitzen oder Einzelleiter, fließt und nach dem Wiedererstarren des Lotes die elektrische Verbindung zwischen dem Bauteil A und dem Bauteil B herstellt.

Eine elektrische Isolierung 3 des Kabels 1, sofern vorhanden, ist am Ende des Kabels 1 entfernt und der elektrische Leiter 4 des Kabels (in Fig.1 eine Vielzahl von Kabellitzen oder Einzelleitern) ist in einem Lötabschnitt des Kontaktstücks 2, das die Lötstelle 5 ausbildet, angeordnet. Der Lötabschnitt ist in diesem Ausführungsbeispiel ein sich eine gewisse Länge erstreckender, rohrförmiger Abschnitt des Kontaktstücks 2, in den der elektrische Leiter gesteckt wird. Das dem Kabel 1 abgewandte axiale Ende des Lötabschnitts ist offen, sodass der elektrische Leiter 4 im Lötabschnitt über dieses axiale Ende zugänglich ist.

Beim erfindungsgemäßen Lötverfahren wird durch elektrischen Strom gelötet. Dazu wird im Bereich der Lötverbindung ein elektrischer Lötstrom I, vorzugsweise im Kiloamperebereich (beispielsweise 10 bis 25 kA) über die Lötstelle 5, beispielsweise im Bereich des Lötabschnitts, geleitet. Der hohe elektrische Lötstrom I ermöglicht insbesondere ein rasches und lokal begrenztes Aufwärmen der Lötstelle 5, konkret des Bauteils A (z.B. der Leiter 4) und des Bauteils B (z.B. das Kontaktstück 2) an der Lötstelle 5, sodass der Wärmeeintrag in die Bauteile A, B zum Löten begrenzt wird. Damit können die Bauteile A, B vor Beschädigungen durch Wärme geschützt wird, insbesondere ein Kabel 1.

Der elektrische Lötstrom I kann von einer elektrischen Energiequelle 11, beispielsweise einer Stromquelle, die einen vorgegebenen elektrischen Strom erzeugt, oder einer Spannungsquelle, die eine vorgegebene elektrische Spannung erzeugt, bereitgestellt werden. Die Energiequelle 11 erzeugt vorzugsweise eine Gleichspannung, kann aber auch eine Wechselspannung erzeugen

Die Lötstelle 5 stellt einen ohmschen Widerstand dar, über den der elektrische Strom I fließt. Der fließende elektrische Lötstrom I erwärmt die Lötstelle 5, beispielsweise den elektrischen Leiter 4 und den Lötabschnitt 5 des Kontaktstücks 2. Das Lot wird an die Lötstelle 5, beispielsweise an den elektrischen Leiter 4 oder das Kontaktstück 2, angelegt, sodass es damit in Wärmeleitkontakt steht und damit ebenfalls erwärmt wird. Das Lot wird dabei über dessen Schmelztemperatur erwärmt, sodass es schmilzt und fließfähig wird.

Das Löten mit elektrischem Lötstrom I aus einer Stromquelle hat den Vorteil, dass zum Löten der hohe elektrische Strom im Kiloampere-Bereich (beispielsweise 10 bis 25 kA) bei niedrigen Spannungen im Bereich von einigen Volt (beispielsweise 5 bis 12V) direkt über die Stromquelle eingestellt werden kann.

Im Falle einer Spannungsquelle um den für das Löten benötigten elektrischen Lötstrom zu erzeugen, wäre der fließende Strom von der Ausgangsspannung der Spannungsquelle und vom Widerstand über die Lötstelle 5 abhängig, der aber variieren kann, sodass die Ausgangsspannung für einen gewünschten Lötstrom geregelt werden müsste, was den Aufwand erhöhen kann. Abgesehen davon wären dabei auch hohe Ausgangsspannungen erforderlich, um die benötigten Lötströme für das Löten zu erzielen. Deshalb ist eine Stromquelle als Energiequelle 1 bevorzugt.

Vorzugsweise wird der elektrische Lötstrom I zum Löten auch gepulst, wodurch während einer Pulszeitspanne elektrischer Lötstrom I fließt und während einer Pausenzeitspanne kein elektrischer Lötstrom I fließt. Die Pulszeitspannen und Pausenzeitspanne wechseln sich dabei ab. Die Energiequelle 11 wird entsprechend angesteuert, beispielsweise von einer Maschinensteuerung 30. "Kein Lötstrom" bedeutet dabei auch einen fließenden elektrischen Strom, der so nieder ist, dass keine signifikante Erwärmung der Lötstelle 5 stattfindet, jedenfalls deutlich unterhalb einer Erwärmung, die zum Schmelzen des Lotes führen würde. Die Pulszeitspanne und Pausenzeitspanne kann im Zehntelsekundenbereich liegen. Durch das Pulsen des Lötstromes I kann der Wärmeeintrag in die Lötstelle 5 besser kontrolliert werden. Insbesondere kann damit das Abschmelzen des Lotes besser und genauer kontrolliert werden, womit auch die Menge an Lot während des Lötvorganges besser und genauer dosiert werden kann.

Eine erfindungsgemäße Lötmaschine 10 ist in Fig.2 dargestellt. Die Lötmaschine 10 hat einen Maschinenrahmen 13 an dem die Maschinenkomponenten angeordnet sind.

Es sind an der Lötmaschine 10 zumindest zwei Spannbacken 14 vorgesehen, zwischen denen die zu lötenden Bauteile A, B, beispielsweise das zu lötende Kontaktstück 2 am Kabel 1 oder dessen Leiter 4, geklemmt werden kann. Hierfür ist zumindest eine Spannbacke 14 relativ zum Maschinenrahmen 13 beweglich (durch Pfeile in Fig.2 angedeutet). Die Spannbacken 14 haben eine Offenstellung, in der die verlöteten Bauteile A, B, beispielswiese ein gelötetes Kabel 1 mit Kontaktstück 2, entnommen werden kann und ungelötete Bauteile A, B, beispielsweise ein Kabel 1 mit Kontaktstück 2 eingelegt werden kann, und eine Geschlossenstellung, in der die zu verlötenden Bauteile A, B, beispielsweise das ungelötete Kabel 1 mit Kontaktstück 2, zum Löten gehalten werden. Die Bewegung der zumindest einen Spannbacken 14 erfolgt durch einen Spannbackenantrieb 15, beispielsweise ein hydraulischer, pneumatischer oder elektrischer Antrieb. Die Art der Bewegung der zumindest einen beweglichen Spannbacke 14 um diese von der Offenstellung in der Geschlossenstellung zu bringen, und umgekehrt, spielt für die Erfindung keine Rolle.

Die Spannbacken 14 sind zumindest teilweise elektrisch leitend ausgeführt, um zumindest ein Bauteil A, B, beispielsweise das Kontaktstück 2 und/oder den Leiter 4 eines Kabels 1, in der Geschlossenstellung elektrisch zu kontaktieren. Die Spannbacken 14 weisen jeweils einen elektrischen Anschluss 16 auf, der jeweils auch mit dem elektrisch leitenden Teil der jeweiligen Spannbacke 14 verbunden ist. Zwischen die Anschlüsse 16 der Spannbacken 14 ist die elektrische Energiequelle 11 geschaltet, um einen elektrischen Lötstrom I in der Geschlossenstellung der Spannbacken 14 über die Lötstelle 5, beispielsweise über dem Bereich des Lötabschnitts des Kontaktstücks 2, zu leiten. Damit wird in der Geschlossenstellung zum Löten ein elektrischer Stromkreis ausgebildet, über den ein elektrischer Lötstrom I von der Energiequelle 11 über eine erste Spannbacke 14, die Lötstelle 5 (beispielsweise über das Kontaktstück 2 und/oder den Leiter 4), die zweite Spannbacke 14 und zurück zur Energiequelle 11 fließt.

Zum Löten wird auch ein Lot 12 benötigt, das der Lötstelle 5 über einen Lotantrieb 20 der Lötmaschine 10 zugeführt wird. Das Lot 12 kann von einer Lotrolle 21 abgewickelt werden, kann aber auch anderweitig zugeführt werden.

Der Lotantrieb 20 besteht in der Ausführung nach Fig.2 aus zwei Rollen, wobei eine davon als angetriebene Antriebsrolle 23 (Antrieb nicht dargestellt) und die andere als Gegendruckrolle 24 ausgeführt sein kann. Es könnte aber zusätzlich auch die Gegendruckrolle 24 angetrieben sein. Die Antriebsrolle 23, und gegebenenfalls auch die Gegendruckrolle 24, wird beispielsweise von einem Elektromotor angetrieben.

Das Lot 12 ist zwischen der Antriebsrolle 23 und der Gegendruckrolle 24 geführt und dazwischen eingeklemmt. Wird die Antriebsrolle 23 angetrieben wird das Lot 12, je nach Drehrichtung, zur Lötstelle hinbewegt oder von dieser wegbewegt.

Der Lotantrieb 20 und die zu verlötenden Bauteile A, B in der Geschlossenstellung der Spannbacken 14 sind so angeordnet, dass das Lot 12 auf die Lötstelle 5 ausgerichtet ist und das Lot bei Bewegung zur Lötstelle 5 an der Lötstelle 5 zumindest an einem der beiden zu verlötenden Bauteile A, B, beispielsweise am elektrischen Leiter 4 im Lötabschnitt des Kontaktstücks 2 und/oder am Kontaktstück 2, ansteht.

Der Lotantrieb 20 ist auf einem Lötwagen 22 angeordnet, der wiederum relativ zum Maschinenrahmen 13 beweglich (angedeutet durch den Doppelpfeil in Fig.2) am Maschinenrahmen 13 angeordnet ist. In der Ausführung nach Fig.2 ist der Lötwagen 22 nach oben und unten bewegbar.

Wird das Lot 12 über den Lotantrieb 20 am Lötwagen 22 solange zur Lötstelle 5 zugeführt, bis das Lot 12 an der Lötstelle 5 ansteht, so wird der Lötwagen 22 bei weiterem Antrieb durch den Lotantrieb 20 entlang des Lotes 12 bewegt, weil die Antriebsrolle 23 und Gegendruckrolle 24 am Lot 12 abrollen - in der Fig.2 würde der Lötwagen 22 nach oben bewegt werden. Über diese Bewegung des Lötwagens 22 kann die Menge an abschmelzenden Lot beim Löten einfach und genau kontrolliert werden, wie nachfolgend noch genauer beschrieben werden wird.

Am Lötwagen 22 können auch Führungsrohre 25, 26 angeordnet sein, in denen das Lot 12 geführt ist. Die Führungsrohre 25, 26 bewegen sich mit dem Lötwagen 22 mit. Führungsrohre für das Lot 12 können bedarfsweise auch am Maschinenrahmen 13 angeordnet sein.

Die Funktionen der Lötmaschine 10, insbesondere des Lotantriebs 20, des Spannbackenantriebs 15 und der Energiequelle 11, werden zur Durchführung einer Lötung von einer Maschinensteuerung 30 gesteuert. Die Maschinensteuerung 30 ist vorzugsweise eine mikroprozessorbasierte Hardware, wie ein Computer, eine speicherprogrammierbare Steuerung, ein Mikrocontroller oder ähnliches, auf der Steuersoftware ausgeführt wird. Die Maschinensteuerung 30 kann aber auch als integrierter Schaltkreis, wie ein Field-Programmable Gate Array (FPGA) oder anwendungsspezifische integrierte Schaltung (ASIC), ausgeführt sein.

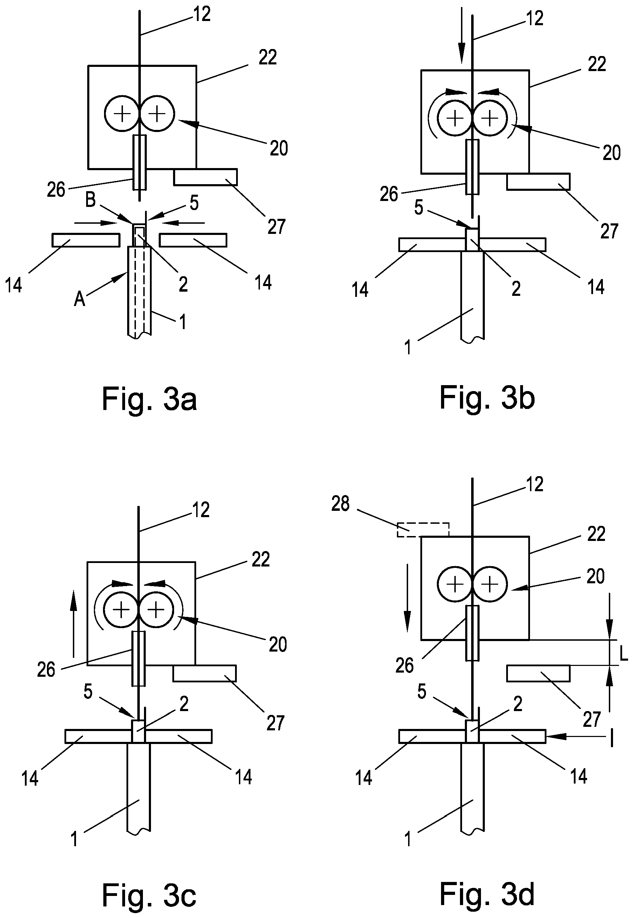

Die Durchführung eines Lötvorganges mit der erfindungsgemäßen Lötmaschine 10 wird mit Bezugnahme auf die Fig.3a bis 3d näher erläutert. In Fig.3a bis 3d sind nur die Teile der Lötmaschine 10 dargestellt, die für das Verständnis der Funktion erforderlich sind.

In Fig.3a ist die Ausgangssituation dargestellt. Die Spannbacken 14 sind in Offenstellung und die lötenden Bauteile A, B, hier ein zu lötendes Kabel 1 mit Leiter 4 und mit Kontaktstück 2, werden eingelegt. Der Lötwagen 22 befindet sich in einer Ausgangslage (in Fig.3a eine untere Ausgangslage), in der der Lötwagen 22 beispielsweise an einem Anschlag 27 ansteht. Das Lot 12 ist von der Lötstelle 5 entfernt. Nach dem Einlegen der Bauteile A, B werden die Spannbacken 14 in die Geschlossenstellung gebracht, in der die Bauteile A, B, für das Löten gehalten werden (angedeutet durch die Pfeile).

In Fig.3b wurden die Spannbacken 14 geschlossen, sodass sich diese in der Geschlossenstellung befinden. Der Lotantrieb 20 wird aktiviert, womit begonnen wird, Lot 12 zur Lötstelle 5 zuzuführen (in Fig.3b durch Pfeile angedeutet). Der Lötwagen 22 befindet sich immer noch in der Ausgangslage, beispielsweise am Anschlag 27 anliegend.

In Fig.3c wurde das Lot 12 über den Lotantrieb 20 solange zugeführt, bis das Lot 12 an der Lötstelle 5, konkret an zumindest einem Bauteil A, B im Bereich der Lötstelle 5, ansteht und kein Lot 12 weiter zugeführt werden kann. Der Lötwagen 22 befindet sich immer noch in der Ausgangslage, beispielsweise am Anschlag 27 anliegend. Der Lotantrieb 20 ist nachwievor aktiv, sodass sich der Lötwagen 22 nun aus der Ausgangslage bewegt (in der Fig.3c nach oben), beispielsweise weil die Antriebsrolle 23 und Gegendruckrolle 24 des Lotantriebs 20 am Lot 12 abrollen.

In Fig.3d wurde der Lötwagen 22 eine bestimmte Lotlänge L aus der Ausgangslage bewegt und der Lotantrieb 20 nach Erreichen der Lotlänge L deaktiviert. Nun kann die Energiequelle 11 aktiviert werden, um den Lötstrom I, vorzugsweise pulsartig, über die Lötstelle 5 zu leiten und die Lötstelle 5 und das daran anliegende Lot 12 zu erwärmen, bis das Lot 12 schmilzt.

Durch das Schmelzen des Lots 12 bewegt sich der Lötwagen 22 zurück in Richtung der Ausgangslage, vorzugsweise durch das Eigengewicht des Lötwagens 22 oder alternativ durch einen eigenen Antrieb des Lötwagens 22. Das Lot 12 bleibt dabei ständig in Kontakt mit der Lötstelle 5 und wird weiter erwärmt und schmilzt solange, bis der Lötwagen 22 wieder die Ausgangslage erreicht und beispielsweise am Anschlag 27 ansteht. Nachdem der Lötantrieb 20 nicht aktiviert ist, wird kein Lot 12 in Richtung der Lötstelle 5 zugeführt. Das Lot 12 verliert dann durch weiteres Abschmelzen rasch den Kontakt zur Lötstelle 5, wodurch auch das weitere Erwärmen und Abschmelzen des Lots 12 unterbunden wird. Der Lötvorgang ist abgeschlossen und die Spannbacken 14 können geöffnet werden, um diese in die Offenstellung zu verfahren und um die verlöteten Bauteile A, B, beispielsweise das gelötete Kabel 1 mit Kontaktstück 2, zu entnehmen.

Durch die Lotlänge L kann die Menge an Lot 12 das für den Lötvorgang abschmilzt genau eingestellt werden. Das ermöglicht es auch, die Lötmaschine 10 sehr flexibel für verschiedene Lötungen einzusetzen.

Am Ende des Lötens, beispielsweise wenn der Lötwagen 22 wieder den Anschlag 27 erreicht, kann das Lot 12 durch den Lotantrieb 20 auch aktiv von der Lötstelle 5 zurückgezogen werden, um ein definiertes Ende des Lötvorganges sicherzustellen. Um das Erreichen des Anschlags 27 zu erkennen, kann am Anschlag 27 ein Endschalter oder ein anderer geeigneter Sensor vorgesehen sein. Der Endschalter oder ein anderer Sensor kann mit der Maschinensteuerung 30 verbunden sein, um dieser ein entsprechendes Signal zu geben.

Die Lotlänge L kann auf verschiedene Weisen eingestellt werden.

Beispielsweise kann aus der bekannten Drehzahl und Geometrie der Antriebsrolle 23 und einer Einschaltzeit, in der der Lotantrieb 20 zum Bewegen des Lötwagens 22 aktiv ist, berechnet werden, wie weit sich der Lötwagen 22 entlang des Lots 12 bewegt. Damit kann die gewünschte Lotlänge L auch einfach vorgegeben werden und durch die Ansteuerung des Lotantriebs 20 über die Maschinensteuerung 30 eingestellt werden.

Es ist ebenso denkbar, dass die Bewegung des Lötwagens 22 durch einen Positionssensor, Abstandssensor oder Wegsensor relativ zu einem definierten Bezugspunkt am Maschinenrahmen 13 erfasst wird. Hierbei kann ein beliebiger Sensor, wie ein Lasersensor, ein induktiver Sensor, ein kapazitiver Sensor, ein optischer Sensor, Ultraschallsensor usw. verwendet werden. Der Sensor kann die Lage des Lötwagens 22 relativ zum Bezugspunkt der Maschinensteuerung 30 signalisieren, die daraus die Lotlänge L ermitteln kann.

Es könnte auch ein verstellbarer Endanschlag 28 vorgesehen sein, wie in Fig.3d gestrichelt angedeutet, sodass der Lötwagen 22 nur bis zu diesem Endanschlag 28 bewegt werden kann. Am Endanschlag 28 könnte ein Endschalter (oder ein anderer geeigneter Sensor) vorgesehen sein, um das Erreichen des Endanschlags zu erkennen und der Maschinensteuerung 30 zu signalisieren.

Auch der Lötstrom I kann auf die jeweilige Lötung angepasst werden, beispielsweise in der Höhe des Lötstromes, in der Art der Pulsung (Pulszeitspanne und Pausenzeitspanne) in der Anzahl der Pulse usw. Es kann auch vorgesehen sein, aufgrund einer vorgegebenen Lotlänge L und eines bekannten Lots 12 einen geeigneten Lötstrom I zu ermitteln, beispielsweise in der Höhe des Lötstromes, in der Art der Pulsung (Pulszeitspanne und Pausenzeitspanne) in der Anzahl der Pulse usw.

Die erfindungsgemäße Lötmaschine 10 und das erfindungsgemäße Lötverfahren sind oben am Beispiel eine Lötung an einem Kabel 1 zum Verbinden eines Leiters 4 des Kabels 1 mit einem Kontaktstück 2 beschrieben. Die erfindungsgemäße Lötmaschine 10 und das erfindungsgemäße Lötverfahren können aber allgemein zum Verbinden von zwei Bauteilen A, B verwendet werden, solange die Bauteile A, B mit den Spannbacken 14 gehalten werden können, die Bauteile A, B zumindest im Bereich der Lötstelle 5 elektrisch leitend sind und das Lot 12 zur Lötstelle 5 zugeführt werden kann und an der Lötstelle 5 an zumindest einem Bauteil A, B anstehen kann, um über den Lotantrieb 20 den Lötwagen 22 zu bewegen.

## Patentansprüche

1. Lötmaschine zum Löten von zwei Bauteilen (A, B) mit einem Maschinenrahmen (13) an dem Spannbacken (14) angeordnet sind, wobei zumindest eine Spannbacke (14) relativ zum Maschinenrahmen (13) zwischen einer Offenstellung und einer Geschlossenstellung bewegbar ist und die Spannbacken (14) einen elektrischen Anschluss (16) haben, an denen eine elektrische Energiequelle (11) angeschlossen ist, und an der Lötmaschine (10) ein Lotantrieb (20) vorgesehen ist, um ein Lot (12) in Richtung zu einer Lötstelle (5) im Bereich der Spannbacken (14) zu bewegen, **dadurch gekennzeichnet, dass** der Lotantrieb (20) auf einem Lötwagen (22) angeordnet ist, der während eines Lötvorganges relativ zum Maschinenrahmen (13) zwischen einer Ausgangslage und einer Lotlänge (L) davon entfernten Endlage bewegbar am Maschinenrahmen (13) angeordnet ist.

2. Lötmaschine nach Anspruch 1, **dadurch gekennzeichnet, dass** am Maschinenrahmen (13) ein Anschlag (27) vorgesehen ist, an dem der Lötwagen (22) in der Ausgangslage vor dem Löten anliegt.

3. Lötmaschine nach Anspruch 1 oder 2, **dadurch gekennzeichnet, dass** am Maschinenrahmen (13) ein Endanschlag (28) vorgesehen ist, an dem der Lötwagen (22) in der Endlage anliegt.

4. Lötmaschine nach Anspruch 1 oder 2, **dadurch gekennzeichnet, dass** am Maschinenrahmen (13) ein Wegsensor, Positionssensor oder Abstandssensor vorgesehen ist, um die Position des Lötwagens (22) relativ zu einem vorgegebenen Bezugspunkt am Maschinenrahmen (13) zu erfassen.

5. Verfahren zum Durchführen eines Lötvorganges mit einer Lötmaschine (10) nach einem der Ansprüche 1 bis 4, **gekennzeichnet, durch** die Verfahrensschritte
- Einlegen der zwei zu verlötenden Bauteile (A, B) in der Offenstellung der Spannbacken (14),
- Verfahren der Spannbacken (14) in die Geschlossenstellung, um die Bauteile (A, B) zu halten und um zumindest einen Bauteil (A, B) elektrisch zu kontaktieren,
- Aktivieren des Lotantriebs (20), um Lot (12) zur Lötstelle (5) zuzuführen, solange bis das Lot (12) an der Lötstelle (5) an zumindest einem Bauteil (A, B) ansteht,
- weiter Aktivieren des Lotantriebs (20) bei anstehendem Lot (12), um den Lötwagen (22) eine vorgegebene Lotlänge (L) aus der Ausgangslage zu bewegen,
- Stoppen des Lotantriebs (20) bei Erreichen der vorgegebenen Lotlänge (L),
- Aktivieren der Energiequelle (11), um einen elektrischen Lötstrom (I) über die Lötstelle (5) zu leiten, sodass die Bauteile (A, B) an der Lötstelle (5) und das daran anliegende Lot (12) erwärmt wird und das Lot (12) abschmilzt, sodass der Lötwagen (22) zurück in Richtung der Ausgangslage bewegt wird und
- Beenden des Lötvorganges, wenn der Lötwagen (22) die Ausgangslage erreicht.

6. Verfahren nach Anspruch 5, **dadurch gekennzeichnet, dass** die Energiequelle (11) beim Beenden des Lötvorganges deaktiviert wird.

7. Verfahren nach Anspruch 5 oder 6, **dadurch gekennzeichnet, dass** das Lot (12) bei Beenden des Lötvorganges durch den Lotantrieb (20) ein vorgegebenes Stück in Richtung von der Lötstelle (5) weg zurückgezogen wird.

8. Verfahren nach einem der Ansprüche 5 bis 7, **dadurch gekennzeichnet, dass** zur Einstellung der vorgegebenen Lotlänge (L), der Lötwagen (22) bewegt wird, bis dieser an einem Endanschlag (28) anliegt.

9. Verfahren nach einem der Ansprüche 5 bis 7, **dadurch gekennzeichnet, dass** zur Einstellung der vorgegebenen Lotlänge (L), die Position des Lötwagens (22) während dessen Bewegung erfasst wird.

10. Verfahren nach einem der Ansprüche 5 bis 9, **dadurch gekennzeichnet, dass** der elektrische Lötstrom (I) pulsartig mit einer Anzahl von Pulsen erzeugt wird, wobei abwechselnd während einer vorgegebenen Pulszeitspanne elektrischer Lötstrom (I) fließt und während einer vorgegebenen Pausenzeitspanne kein elektrischer Lötstrom (I) fließt.
